(19) Europäisches Patentamt
European Patent Office
Office européen des brevets

(11) **EP 4 231 062 A1**

(12) **EUROPEAN PATENT APPLICATION**
published in accordance with Art. 153(4) EPC

(43) Date of publication:
**23.08.2023 Bulletin 2023/34**

(21) Application number: **21879908.8**

(22) Date of filing: **04.10.2021**

(51) International Patent Classification (IPC):
*G02B 3/00* (2006.01)       *G02B 3/08* (2006.01)
*G02B 1/118* (2015.01)       *G02B 5/32* (2006.01)
*H01L 27/146* (2006.01)      *H04N 5/225* (2006.01)
*H04N 5/335* (2011.01)       *G06F 3/041* (2006.01)
*G06F 3/042* (2006.01)

(52) Cooperative Patent Classification (CPC):
**G02B 1/118; G02B 3/00; G02B 3/08; G02B 5/32;
G06F 3/041; G06F 3/042; H01L 27/146;
H04N 23/00; H04N 25/00**

(86) International application number:
**PCT/JP2021/036639**

(87) International publication number:
**WO 2022/080168 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.10.2020 JP 2020173744**

(71) Applicant: **Sony Semiconductor Solutions
Corporation
Atsugi-shi, Kanagawa 243-0014 (JP)**

(72) Inventors:
• **BABA, Tomohiko
Atsugi-shi, Kanagawa 243-0014 (JP)**
• **NOUDO, Shinichiro
Kikuchi-gun, Kumamoto 869-1102 (JP)**

(74) Representative: **Müller Hoffmann & Partner
Patentanwälte mbB
St.-Martin-Strasse 58
81541 München (DE)**

(54) **LIGHT-RECEIVING APPARATUS AND ELECTRONIC DEVICE**

(57)    The present disclosure relates to a light receiving apparatus and an electronic appliance that enable achievement of more preferable image quality.

A light receiving apparatus includes: a semiconductor substrate including a first photodetector and a second photodetector arranged within at least substantially a same light receiving plane; and an optical member including at least a first optical system that allows light to enter the first photodetector and a second optical system that allows light to enter the second photodetector. In addition, a first pixel of an image formed at the first photodetector with the light entering the first photodetector through the first optical system is different in orientation of a principal ray on an object side from a second pixel of an image formed at the second photodetector with the light entering the second photodetector through the second optical system. The present technology is applicable to, for example, various authentication devices.

EP 4 231 062 A1

# FIG. 1

**Description**

TECHNICAL FIELD

The present disclosure relates to a light receiving apparatus and an electronic appliance, and particularly relates to a light receiving apparatus and an electronic appliance that enable achievement of more favorable image quality.

BACKGROUND ART

An image recognition system has conventionally been developed, which includes a thin light receiving apparatus (e.g., 1 mm or less in total length) not including an imaging lens, but employing an arrangement of a large number of microlenses equal in size to unit pixels of an imaging element.

For example, Patent Document 1 discloses a configuration in which two pinhole arrays are provided between a microlens array and a sensor array. Further, Patent Document 2 discloses a configuration in which one pinhole array is provided between a microlens array and a sensor array. Patent Document 2 also discloses an image recognition system including a plurality of microlenses each having a given angle of view and aligned such that an optical axis of a central one of the microlenses is perpendicular to a photosensitive surface of a corresponding one of sensors and optical axes of the remaining microlenses gradually incline with respect to photosensitive surfaces of the corresponding sensors. Here, the optical axis of the microlens nearer to the central microlens is smaller in inclination angle than the optical axis of the microlens farther from the central microlens.

CITATION LIST

PATENT DOCUMENT

Patent Document 1: Japanese Patent No. 5488928
Patent Document 2: Japanese Unexamined Patent Application Publication (Translation of PCT Application) No. 2007-520743

SUMMARY OF THE INVENTION

PROBLEMS TO BE SOLVED BY THE INVENTION

According to the foregoing configurations disclosed in Patent Documents 1 and 2, however, the pinhole restricts multidirectional incidence of light, which may reduce light utilization efficiency. Further, in the pinhole nearer to the periphery of the pinhole array, the spot has an out-of-round or oval shape, so that a ray with a desired angle of view, selected by the pinhole, has failed to reach a photodetector. Consequently, it has conventionally been difficult to achieve favorable image quality.

The present disclosure has been made in view of such a situation and enables achievement of more favorable image quality.

SOLUTIONS TO PROBLEMS

In one aspect of the present disclosure, a light receiving apparatus includes: a semiconductor substrate including a first photodetector and a second photodetector arranged within at least substantially a same light receiving plane; and an optical member including at least a first optical system that allows light to enter the first photodetector and a second optical system that allows light to enter the second photodetector. A first pixel of an image formed at the first photodetector with the light entering the first photodetector through the first optical system is different in orientation of a principal ray on an object side from a second pixel of an image formed at the second photodetector with the light entering the second photodetector through the second optical system.

In one aspect of the present disclosure, an electronic appliance includes a light receiving apparatus. The light receiving apparatus includes: a semiconductor substrate including a first photodetector and a second photodetector arranged within at least substantially a same light receiving plane; and an optical member including at least a first optical system that allows light to enter the first photodetector and a second optical system that allows light to enter the second photodetector. A first pixel of an image formed at the first photodetector with the light entering the first photodetector through the first optical system is different in orientation of a principal ray on an object side from a second pixel of an image formed at the second photodetector with the light entering the second photodetector through the second optical system.

In one aspect of the present disclosure, the first pixel of the image formed at the first photodetector with the light entering the first photodetector through the first optical system is different in orientation of the principal ray on the object side from the second pixel of the image formed at the second photodetector with the light entering the second photodetector through the second optical system.

BRIEF DESCRIPTION OF DRAWINGS

Fig. 1 is a diagram illustrating a configuration example of a first embodiment of an authentication device to which the present technology is applied.
Fig. 2 is a diagram illustrating a sectional configuration example of an optical member.
Fig. 3 is an explanatory diagram of an angle of view in the authentication device.
Fig. 4 is a diagram illustrating an orientation of a principal ray on an object side in plan view.
Fig. 5 is an explanatory diagram of a Keplerian optical system.
Fig. 6 is an explanatory diagram of first to third conditions for an optical system.
Fig. 7 is a diagram illustrating a configuration example of a second embodiment of an authentication device.
Fig. 8 is a diagram illustrating a configuration example of a third embodiment of an authentication device.
Fig. 9 is a diagram illustrating a configuration example of a fourth embodiment of an authentication device.
Fig. 10 is a diagram illustrating an example of a Fresnel lens and an example of a hologram element.
Fig. 11 is a diagram illustrating a configuration example of a fifth embodiment of an authentication device.
Fig. 12 is a diagram illustrating an example of use as a fingerprint authentication system.
Fig. 13 is a diagram illustrating an example of use as a face authentication and iris authentication system.
Fig. 14 is a diagram illustrating a first configuration example of a light shielding portion.
Fig. 15 is a diagram illustrating the first configuration example of the light shielding portion.
Fig. 16 is a diagram illustrating a second configuration example of the light shielding portion.
Fig. 17 is a diagram illustrating the second configuration example of the light shielding portion.
Fig. 18 is an explanatory diagram of a fine structure on a surface.
Fig. 19 is an explanatory diagram of a configuration example of a fingerprint sensor.
Fig. 20 is an explanatory diagram of a method for manufacturing the authentication device.
Fig. 21 is an explanatory diagram of a method for manufacturing the hologram element.
Fig. 22 is a block diagram illustrating a configuration example of an imaging apparatus.
Fig. 23 is a diagram illustrating an example of use of an image sensor.

MODE FOR CARRYING OUT THE INVENTION

Hereinafter, specific embodiments to which the present technology is applied will be described in detail with reference to the drawings.

<First configuration example of authentication device>

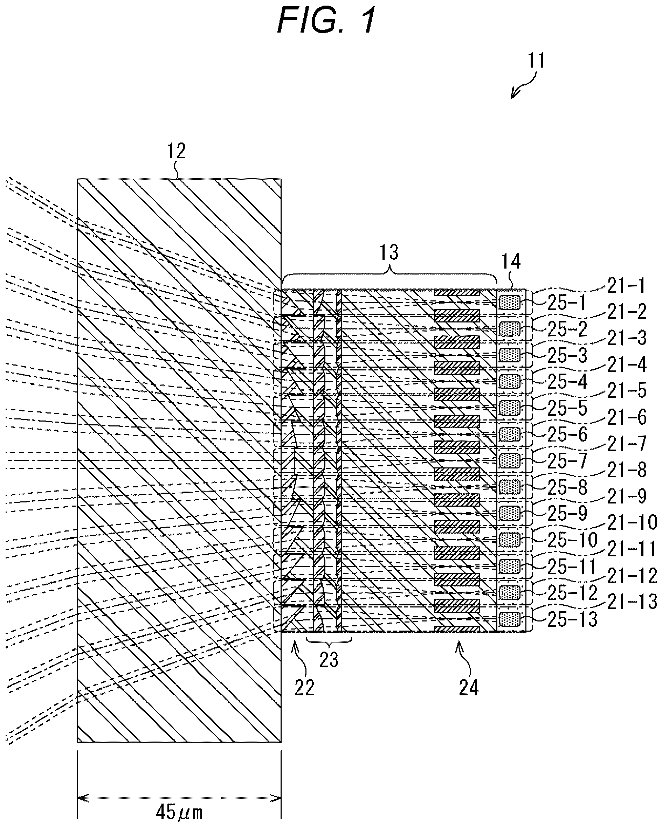

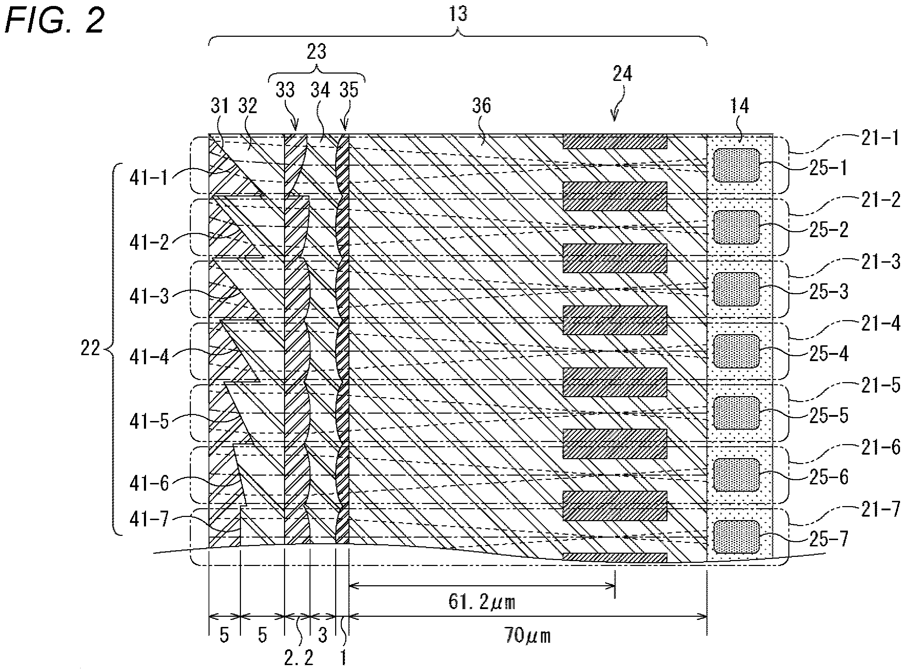

Fig. 1 is a diagram illustrating a configuration example of a first embodiment of an authentication device to which the present technology is applied.
An authentication device 11 illustrated in Fig. 1 is, for example, a light receiving apparatus for use in fingerprint authentication. The authentication device 11 can also be used for vein authentication, iris authentication, deauthentication, a lensless microscope, a cell separation apparatus, a glass inspection apparatus, a semiconductor testing apparatus, a contact copying machine, and the like.
The authentication device 11 includes a cover glass 12, an optical member 13, and a semiconductor substrate 14 stacked in this order from an object side, and also includes a plurality of pixels 21 arranged in a matrix form. In the authentication device 11, further, an optical system is configured for each pixel 21 such that principal rays on the object side (optical axes indicated by dot-and-dash lines) are oriented in different directions. Fig. 1 illustrates a sectional structure of the configuration example of the authentication device 11 in which 13 pixels 21-1 to 21-13 are arranged in a column direction or a row direction.
The cover glass 12 is formed from, for example, a transparent member having a d-line refractive index of 1.15 and a thickness of 45 $\mu$m, and protects a surface of the authentication device 11.
The optical member 13 constitutes an optical system including a refraction plane 22, a microlens group 23,

and a light shielding portion 24, with a structure that fills a clearance between the cover glass 12 and the semiconductor substrate 14 with a transparent body which is a medium other than air (see Fig. 2 to be described later).

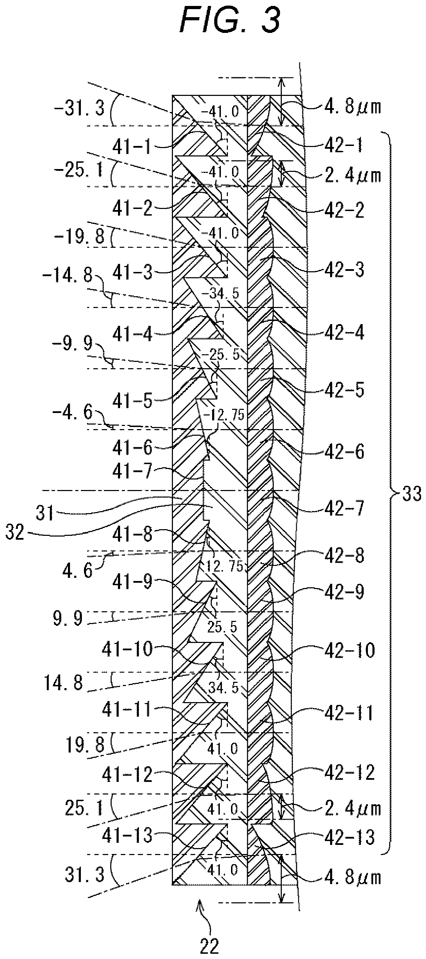

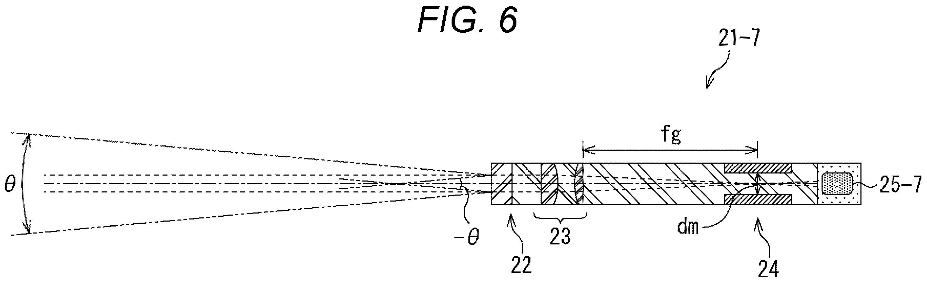

In the refraction plane 22, an inclined surface inclined at a predetermined inclination angle (see Fig. 3 to be described later) is provided for each pixel 21 in order to refract a principal ray entering the optical member 13, for each pixel 21. In the microlens group 23, a lens body (see Fig. 2 to be described later) is provided for each pixel 21 in order to collect light refracted by the refraction plane 22, for each pixel 21 and to form an image at a photodetector 25 of the semiconductor substrate 14. In the light shielding portion 24, a pinhole having a predetermined diameter (see Fig. 6 to be described later) is provided for each pixel 21 in order to allow passage of the light collected by the microlens group 23, for each pixel 21 and to block the light other than the light collected in each pixel 21.

It should be noted that an optical member such as a bandpass filter may be disposed above or below a layer of a transparent body such as a glass constituting the optical member 13, between microlenses of the microlens group 23, or near these microlenses.

In the semiconductor substrate 14, the photodetector 25 is provided for each pixel 21 to constitute a sensor light receiving plane that receives light refracted and collected by the optical member 13, for each pixel 21. For example, the semiconductor substrate 14 may be a solid-state imaging element such as a charge coupled device (CCD) image sensor or a complementary metal oxide semiconductor (CMOS) image sensor.

The authentication device 11 thus configured does not include an imaging lens, but includes the microlens group 23 equal in size to each pixel 21 of the semiconductor substrate 14. The authentication device 11 therefore enables achievement of high light utilization efficiency and more preferable image quality. In addition, by employing the authentication device 11, it is possible to provide, for example, a very thin and high image quality image recognition system having an optical length of 1 mm or less.

Fig. 2 is a diagram illustrating a sectional configuration example of the optical member 13.

As illustrated in Fig. 2, the optical member 13 includes a transparent body 31, a transparent body 32, a lens body 33, a transparent body 34, a lens body 35, and a transparent body 36 stacked in this order from the object side.

The transparent body 31 is formed from a transparent member having a d-line refractive index of 1.55 and a thickness of 5 um. The transparent body 32 is formed from a transparent member having a d-line refractive index of 1.9 and a thickness of 5 um. Further, an interface between the transparent body 31 and the transparent body 32 constitutes the refraction plane 22, and a principal ray entering the optical member 13 can be refracted in accordance with a difference in refractive index at an inclined surface 41 formed on the interface.

The lens body 33 is formed from a lens material having a d-line refractive index of 1.9 and a thickness of 2.2 um. The transparent body 34 is formed from a transparent member having a d-line refractive index of 1.48 and a thickness of 3 um, and the lens body 33 is formed from a lens material having a d-line refractive index of 1.9 and a thickness of 1 um. Further, the lens body 33 is formed to have a curvature of -15 um and the lens body 35 is formed to have a curvature of 15 $\mu$m, so that the microlens group 23 is formed. Therefore, a ray entering from the object side forms an image at the photodetector 25 by the lens effects of the lens body 33 and lens body 35. In addition, each pixel 21 is configured to have an optical axis perpendicular to the sensor light receiving plane of the semiconductor substrate 14 in a region from at least the photodetector 25 to a position immediately before the microlens group 23 such that, for example, an optical axis inside the transparent body 36 is orthogonal to the sensor light receiving plane.

The transparent body 36 is formed from a transparent member having a d-line refractive index of 1.55 and a thickness of 70 um, and the light shielding portion 24 is provided inside the transparent body 36.

The light shielding portion 24 is disposed near a focal position where light is collected by the microlens group 23. For example, in a configuration in which the sensor light receiving plane of the semiconductor substrate 14 is provided immediately below the light shielding portion 24, the optical system has a total length of 61.2 um. In actual, the sensor light receiving plane of the semiconductor substrate 14 is provided away from the light shielding portion 24 by several micrometers. In addition, a semiconductor layer (epitaxial layer) having a thickness of several micrometers is provided from the sensor light receiving plane to the photodetector 25. Therefore, the optical system has a total length of more than 70 $\mu$m.

With reference to Fig. 3, a description will be given of an angle of view of the authentication device 11.

As illustrated, in the configuration in which the authentication device 11 includes the 13 pixels 21-1 to 21-13, the refraction plane 22 includes inclined surfaces 41-1 to 41-13. Each of the inclined surfaces 41-1 to 41-3 is formed at an inclination angle of -41.0°. The inclined surface 41-4 is formed at an inclination angle of -34.5°. The inclined surface 41-5 is formed at an inclination angle of -25.5°. The inclined surface 41-6 is formed at an inclination angle of -12.75°. The inclined surface 41-7 is formed at an inclination angle of 0°. The inclined surface 41-8 is formed at an inclination angle of 12.75°. The inclined surface 41-9 is formed at an inclination angle of 25.5°. The inclined surface 41-10 is formed at an inclination angle of 34.5°. Each of the inclined surfaces 41-11 to 41-13 is formed at an inclination angle of 41.0°.

Here, among 13 lens portions 42-1 to 42-13 constituting the lens body 33, each of the lens portions 42-3 to 42-11 are disposed at positions where their central axes respectively coincide with the optical axes of the pixels 21-3 to 21-11.

On the other hand, the lens portion 42-1 is disposed at a position where its central axis is eccentric outward along a plane direction of the sensor light receiving plane (upward in Fig. 3) with respect to the optical axis of the pixel 21-1 by an eccentricity amount of 4.8 um. In addition, the lens portion 42-2 is disposed at a position where its central axis is eccentric outward along the plane direction of the sensor light receiving plane (upward in Fig. 3) with respect to the optical axis of the pixel 21-2 by an eccentricity amount of 2.4 um. Likewise, the lens portion 42-13 is disposed at a position where its central axis is eccentric outward along the plane direction of the sensor light receiving plane (downward in Fig. 3) with respect to the optical axis of the pixel 21-13 by an eccentricity amount of 4.8 um. In addition, the lens portion 42-12 is disposed at a position where its central axis is eccentric outward along the plane direction of the sensor light receiving plane (downward in Fig. 3) with respect to the optical axis of the pixel 21-12 by an eccentricity amount of 2.4 $\mu$m.

As described above, the authentication device 11 is capable of appropriately setting the inclination angles of the inclined surfaces 41-1 to 41-13 and the arrangement (eccentricity) of the central axes of the lens portions 42-1 to 42-13, thereby constituting the optical system in which the pixels 21 are oriented at different angles of view (the angles of the principal rays are changed).

For example, the pixel 21-1 has an angle of view of - 31.3°. The pixel 21-2 has an angle of view of -25.1°. The pixel 21-3 has an angle of view of -19.8°. The pixel 21-4 has an angle of view of -14.8°. The pixel 21-5 has an angle of view of -9.9°. The pixel 21-6 has an angle of view of -4.6°. The pixel 21-7 has an angle of view of 0°. The pixel 21-8 has an angle of view of 4.6°. The pixel 21-9 has an angle of view of 9.9°. The pixel 21-10 has an angle of view of 14.8°. The pixel 21-11 has an angle of view of 19.8°. The pixel 21-12 has an angle of view of 25.1°. The pixel 21-13 has an angle of view of 31.3°.

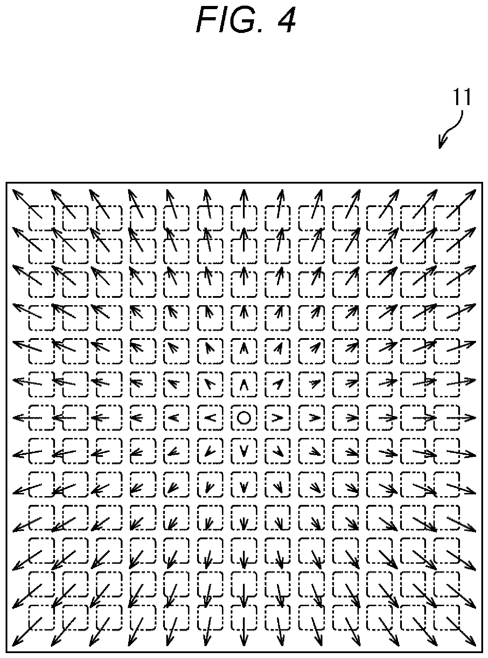

Fig. 4 illustrates a conceptual diagram showing orientations of the principal rays on the object side when the authentication device 11 is seen in plan view.

In Fig. 4, rectangles indicated by chain double-dashed lines represent the pixels 21 arranged in the matrix form on the sensor light receiving plane of the authentication device 11. In the illustrated example, 13×13 pixels 21 are arranged in the matrix form. In addition, arrows oriented outward in the plane direction of the authentication device 11 from the centers of the respective pixels 21 each defined as a starting point indicate orientations of the principal rays on the object side.

As described above, in the authentication device 11, the optical system has the configuration in which the principal rays from the respective pixels 21 on the object side are oriented outward from the pixel 21 located at the center of the authentication device 11.

It should be noted that the description has been given on the configuration example of the authentication device 11 having the 13 pixels 21 arranged in the column direction or the row direction with reference to Figs. 1 to 4. Alternatively, the authentication device 11 may include a larger number of pixels 21. That is, the authentication device 11 may include any number of pixels 21.

<Principles of optical system of authentication device>

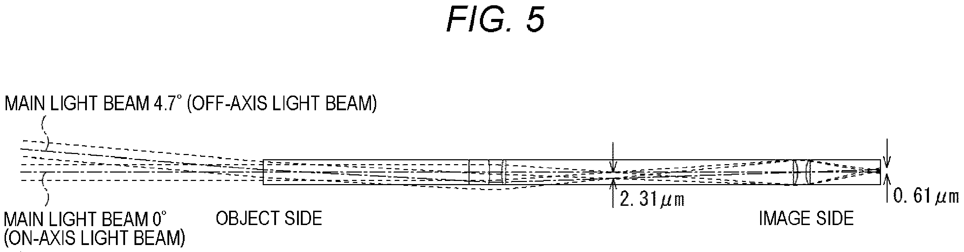

With reference to Figs. 5 and 6, a description will be given of the principles of the optical system of the authentication device 11.

Fig. 5 is an explanatory diagram of an optical system having a configuration in which each pixel 21 forms an image at one point of a certain object, the authentication device 11 functions as an imaging device as a whole, and the use of an imaging lens is unnecessary.

In a Keplerian optical system illustrated in Fig. 5, a transparent body having a d-line refractive index of 1.55 and a thickness of 50 $\mu$m, a transparent body formed from a lens material having a d-line refractive index of 1.9 and a thickness of 5 $\mu$m, and having a lens curvature of -15 um, a d-line refractive index of 1.48, and a thickness of 3 $\mu$m, a transparent body formed from a lens material having a d-line refractive index of 1.9 and a thickness of 1 um, and having a lens curvature of 15 $\mu$m, a d-line refractive index of 1.55, and a thickness of 70 $\mu$m, a transparent body formed from a lens material having a d-line refractive index of 1.9 and a thickness of 1 um, and having a lens curvature of -7 um, a d-line refractive index of 1.48, and a thickness of 2 um, and a transparent body formed from a lens material having a d-line refractive index of 1.9 and a thickness of 1 um, and having a lens curvature of 7 $\mu$m, a d-line refractive index of 1.55, and a thickness of 17 $\mu$m are arranged in this order from the object side, and a sensor light receiving plane is further disposed on the image side.

Fig. 5 illustrates two types of rays, that is, an upper ray and a lower ray centered on a ray which is a principal ray of 0° as an on-axis ray and an upper ray and a lower ray centered on a ray which is a principal ray of 4.7° as an off-axis ray. Here, the on-axis ray and the off-axis ray form images while separating from each other by 0.61 um on a light receiving plane, and form images while separating from each other by 2.31 um at a position where an image is formed near a center on the figure.

The authentication device 11 according to the present embodiment needs to shield the off-axis ray so as to have a configuration in which one pixel 21 detects only a single point of light narrowed as much as possible on the object side and the use of an imaging lens is unnecessary. Therefore, a structure that blocks light with, for example, a pinhole having a diameter of 1 um, at a position where a ray forms an image enables transmission of all the on-axis rays and shielding of the off-axis ray. On the other hand, at a position near the light receiving plane, the on-axis ray and the off-axis ray are separated from each other only by 0.61 um. In addition, almost all the on-axis rays and off-axis rays pass the same position as illustrated. Therefore, even when a structure of shielding light at the position near the light receiving plane is employed, only a slight separation effect is produced.

Moreover, the authentication device 11 includes a solid-state imaging element such as a CCD image sensor or a CMOS image sensor, which eliminates the need for recoupling from light shielding means to an image plane. Therefore, it is possible to manufacture the authentication device 11 at reduced cost, using a structure similar to that of a CMOS image sensor which has recently been mass-produced, in such a manner that the photodetector 25 is disposed immediately after light shielding means such as the pinhole.

Here, in order to realize an optical system in which only one point immediately above an imaging element can been seen, for example, a Keplerian optical system illustrated in Fig. 5 has been required for analog technology in an era during which film cameras, imaging tubes, and the like have been utilized. On the other hand, according to digital technology in an era during which solid-state imaging elements such as CCD image sensors and CMOS image sensors are utilized, advantageous effects similar to those of this Keplerian optical system can be produced in such a manner that a photodetector is disposed immediately after a pinhole disposed at a position narrowed first (a position near the center of Fig. 5).

That, as illustrated in Fig. 6, the optical system of the authentication device 11 employs a structure in which the pinhole of the light shielding portion 24 is disposed at the position where light is narrowed by the microlens group 23 and the photodetector 25 of the semiconductor substrate 14 is disposed immediately after the pinhole.

Here, with reference to the pixel 21-7 illustrated in Fig. 6, a description will be given of first to third conditions for the optical system, which each pixel 21 preferably satisfies.

First, an angle $\theta$ formed by an upper ray and a lower ray in the pixel 21-7 located at the center of the authentication device 11 preferably satisfies a condition represented by the following formula (1). Here, as illustrated, -$\theta$ represents an angle in a light collecting direction, and +$\theta$ represents an angle in a light diverging direction.

[Mathematical Formula 1]

$$-10° \leqq \theta \leqq 10° \qquad \cdots (1)$$

For example, the authentication device 11 desirably has an imaging lensless imaging function such that one pixel 21 senses only the light at one point on the object side narrowed as much as possible. Hence, in a case where the upper and lower rays are diverged while being opened, the light cannot be connected at the one point on the object side; therefore, information is mixed between the adjacent pixels 21. In order to avoid such a situation, an upper limit is set for the angle $\theta$ between the upper ray and the lower ray. On the other hand, use of capturing an image of an object in very close to the object is also considered for the authentication device 11. At this time, the angle between the upper and lower rays in collecting light becomes a negative angle. As described above, in consideration of an increase in optical path from the light receiving plane side and difficulty in manufacturing a high power microlens, it is considered that a ray angle having an F value of 2.0 is not exceeded. Therefore, a lower limit is set for the angle $\theta$ between the upper ray and the lower ray.

Hence, the first condition is required for providing the upper limit and lower limit as represented by the foregoing formula (1).

Second, a focal length fg of the microlens group 23 preferably satisfies a condition represented by the following formula (2).

[Mathematical Formula 2]

$$0.0003mm \leqq fg \leqq 3mm \qquad \cdots (2)$$

For example, a lower limit is set for the focal length fg since the fine structure of each pixel 21 has a limit of about 0.6-um pitch. On the other hand, an upper limit is set for the focal length fg in order to specify an internal structure of the authentication device 11 and to distinguish the authentication device 11 from, for example, a device such as a microscope or a telescope.

Third, a diameter dm of the pinhole provided in the light shielding portion 24 disposed near the focal position of the microlens group 23 preferably satisfies a condition represented by the following formula (3).

[Mathematical Formula 3]

$$0.1\,\mu m \leqq dm \leqq 2\,\mu m \qquad \cdots (3)$$

For example, the fundamental principle of the authentication device 11 is to select a ray passing through the pinhole provided in the light shielding portion 24 disposed at a position where the light is narrowed by the microlens group 23. Therefore, there is an application range for the diameter dm of the pinhole. For example, the lower limit for the diameter dm of the pinhole is set at 0.1 um allowing passage of visible light since it is assumed that the authentication device 11 is utilized at a wavelength more than visible light. On the other hand, the upper limit for the diameter dm of the pinhole is set at 2 um required for selecting light allowed to pass through the pinhole. It should be noted that the shape of the pinhole is not limited to a circular shape. For example, a shape such as a rectangular shape having a length of each side equal to the foregoing diameter may be used.

The authentication device 11 according to the present embodiment appropriately employs the foregoing first to third conditions, thereby achieving performance suitable for each apparatus.

<Second configuration example of authentication device>

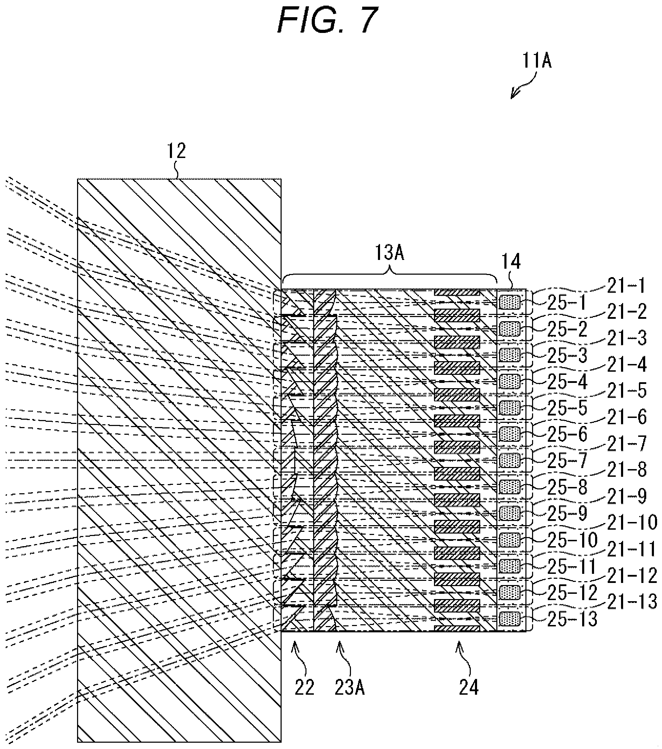

Fig. 7 is a diagram illustrating a configuration example of a second embodiment of an authentication device to which the present technology is applied. It should be noted that, in an authentication device 11A illustrated in Fig. 7, configurations common to the authentication device 11 of Fig. 1 are denoted by the same reference signs, and a detailed description thereof will be omitted.

As illustrated in Fig. 7, the authentication device 11A includes a cover glass 12, an optical member 13A, and a semiconductor substrate 14 stacked in this order from an object side. The cover glass 12 and semiconductor substrate 14 are common in configuration to those in the authentication device 11 of Fig. 1.

In the optical member 13A, a refraction plane 22 and a light shielding portion 24 are common in configuration to those in the authentication device 11 of Fig. 1 while a microlens group 23A is different in configuration from that in the authentication device 11 of Fig. 1. That is, the microlens group 23 of Fig. 1 has the configuration in which the lens body 33 and the lens body 35 are combined with each other as described above with reference to Fig. 2.

On the other hand, the microlens group 23A has a configuration in which one lens body constitutes an optical system that collects light, as in the combination of the lens body 33 with the lens body 35.

The authentication device 11A thus configured enables achievement of more preferable image quality, as in the authentication device 11 of Fig. 1.

<Third configuration example of authentication device>

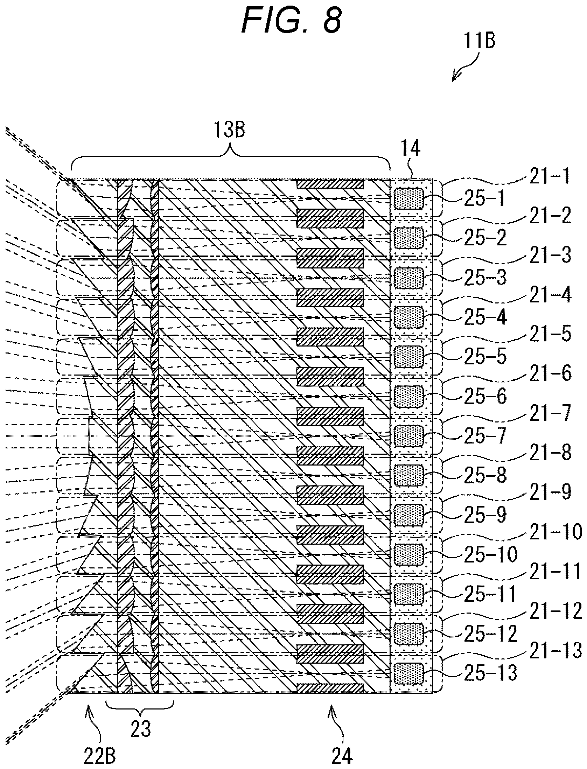

Fig. 8 is a diagram illustrating a configuration example of a third embodiment of an authentication device to which the present technology is applied. It should be noted that, in an authentication device 11B illustrated in Fig. 8, configurations common to the authentication device 11 of Fig. 1 are denoted by the same reference signs, and a detailed description thereof will be omitted.

As illustrated in Fig. 8, the authentication device 11B includes an optical member 13B and a semiconductor substrate 14 stacked in this order from an object side. The semiconductor substrate 14 is common in configuration to that in the authentication device 11 of Fig. 1.

That is, the authentication device 11B has a configuration in which the cover glass 12 of Fig. 1 is not provided, and has a structure in which light directly enters a refraction plane 22B of the optical member 13B. Accordingly, the authentication device 11B has a configuration in which light entering the optical member 13B is refracted in accordance with a difference in refractive index between air and the refraction plane 22B.

The authentication device 11B thus configured enables achievement of more preferable image quality, as in the authentication device 11 of Fig. 1.

<Fourth configuration example of authentication device>

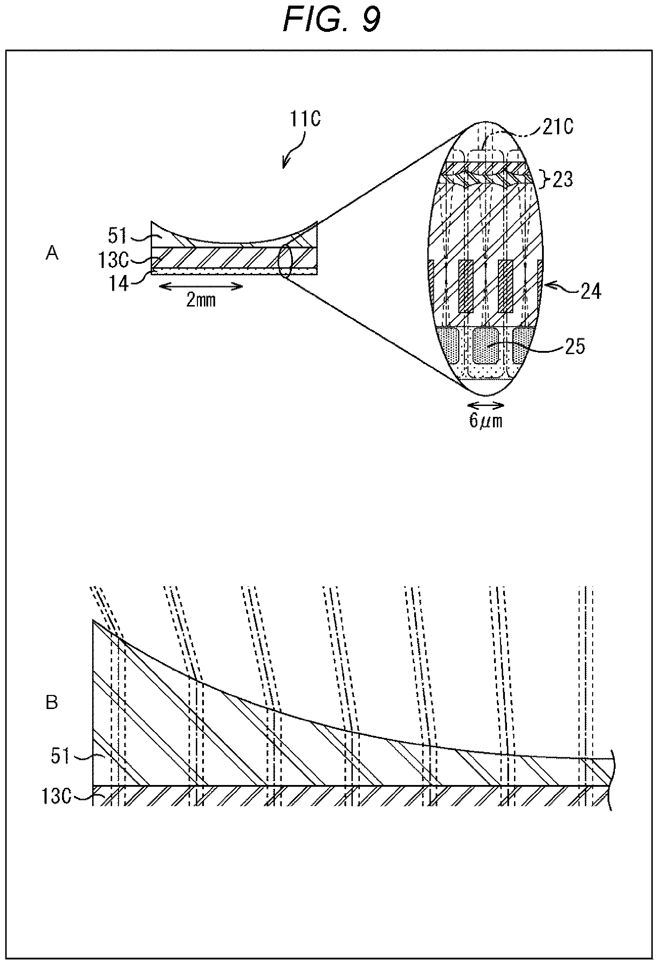

Fig. 9 is a diagram illustrating a configuration example of a fourth embodiment of an authentication device to which the present technology is applied. It should be noted that, in an authentication device 11C illustrated in Fig. 9, configurations common to the authentication device 11 of Fig. 1 are denoted by the same reference signs, and a detailed description thereof will be omitted.

As illustrated in Fig. 9, the authentication device 11C includes a concave lens 51, an optical member 13C, and a semiconductor substrate 14 stacked in this order from an object side. The semiconductor substrate 14 is common in configuration to that in the authentication device 11 of Fig. 1. Seven principal rays refracted by the concave lens 51 are illustrated in B of Fig. 9.

The authentication device 11B illustrated in Fig. 8 has the configuration in which air directly enters the refraction plane 22B that plays a role of refracting a principal ray. On the other hand, the authentication device 11C has a configuration in which this role is achieved by the concave lens 51 having a continuous concave plane. Further, the optical member 13C includes a microlens group 23 and a light shielding portion 24 for each pixel 21C, as in the optical member 13 of Fig. 1.

The authentication device 11C may have a structure in which, for example, 400×533 pixels 21C are provided in a region having a length of 2.4 mm, a width of 3.2 mm, and a maximum radius of 2 mm. Further, the authentication device 11C may have a configuration in which, for example, the concave lens 51 including a transparent body having a concave plane with a curvature radius of 4.1 mm is arranged on these pixels 21C.

The authentication device 11C thus configured enables an imaging function of 213,000 pixels at a maximum total angle of view of 40°, and enables achievement of more preferable image quality as in the authentication device 11 of Fig. 1.

It should be noted that the authentication device 11C may employ, instead of the concave lens 51 having the function as the refraction plane 22, a Fresnel lens or a hologram element having the similar function.

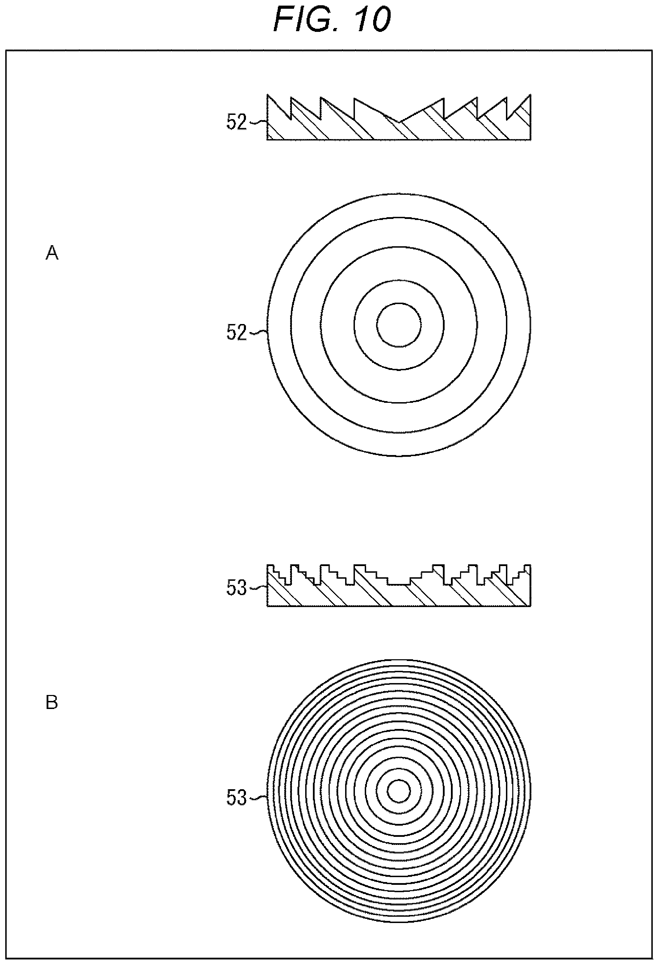

A sectional view and a plan view of a Fresnel lens 52 that refracts light as in the concave lens 51 are illustrated in A of Fig. 10.

A sectional view and a plan view of a hologram element 53 that refracts light as in the concave lens 51 are illustrated in B of Fig. 10.

Moreover, for example, an element that is configured with a column, a prism, a cylinder, a part of a cylinder, or the like and has a function as the refraction plane 22 by bending light with a wave optical effect (so-called metalens) may be employed in addition to the Fresnel lens 52 and the hologram element 53.

<Fifth configuration example of authentication device>

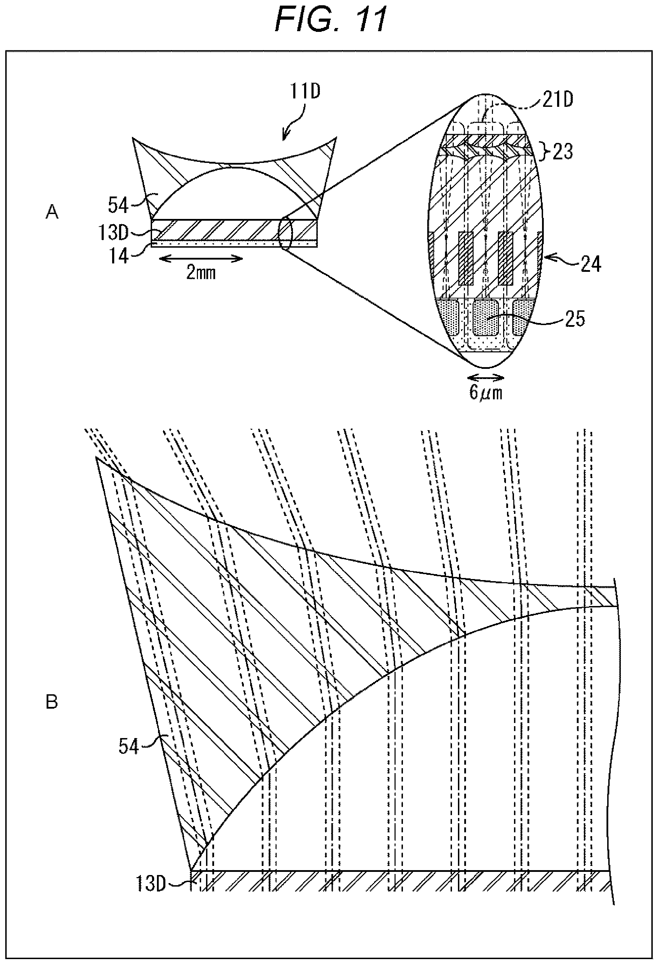

Fig. 11 is a diagram illustrating a configuration example of a fifth embodiment of an authentication device to which the present technology is applied. It should be noted that, in an authentication device 11D illustrated in Fig. 11, configurations common to the authentication device 11 of Fig. 1 are denoted by the same reference signs, and a detailed description thereof will be omitted.

As illustrated in Fig. 11, the authentication device 11D includes a double-sided concave lens 54, an optical member 13D, and a semiconductor substrate 14 stacked in this order from an object side. The semiconductor substrate 14 is common in configuration to that in the authentication device 11 of Fig. 1.

The double-sided concave lens 54 has a configuration in which, for example, a concave plane on the object side is formed into a spherical plane having a curvature radius of -9 mm, a concave plane on an image side has a curvature radius of 4.25 mm, and a center thickness of the lens is 0.33 mm. An air layer is provided between the double-sided concave lens 54 and the optical member 13D at an interval of 0.71 mm.

Seven principal rays refracted by the double-sided concave lens 54 are illustrated in B of Fig. 11. These principal rays are designed to respectively have an angle of view of 23.9°, an angle of view of 18.8°, an angle of view of 14.5°, an angle of view of 10.6°, an angle of view of 6.9°, an angle of view of 3.4°, and an angle of view 0°, from an outermost one to a center one of the principal rays. Further, the authentication device 11D may include 400×533 pixels 21D as in the authentication device 11C of Fig. 9 or may include any number of pixels 21D.

The authentication device 11D thus configured enables achievement of more preferable image quality, as in the authentication device 11 of Fig. 1.

<Example of use of authentication device>

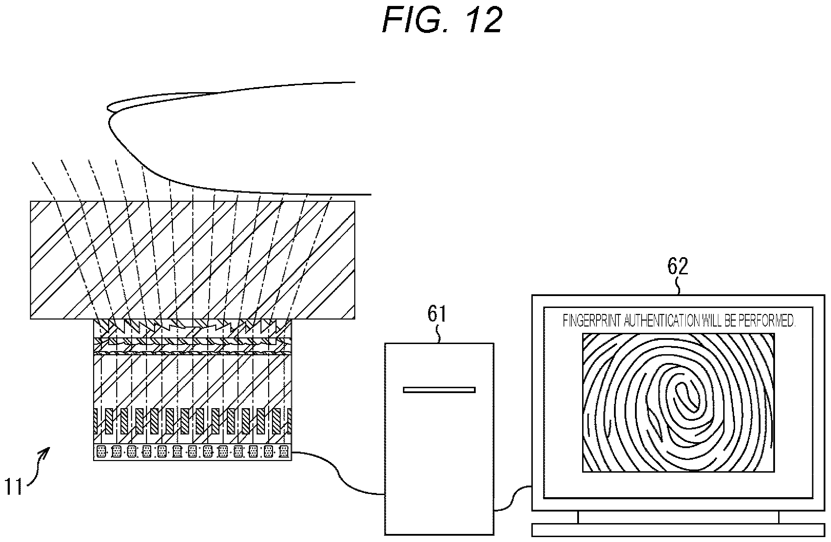

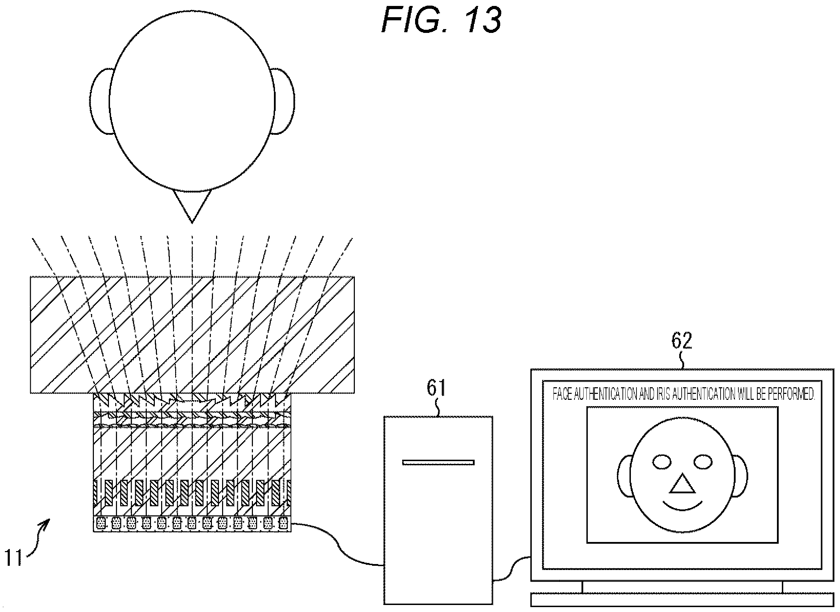

With reference to Figs. 12 and 13, a description will be given of an example of use of the authentication device 11.

Fig. 12 illustrates an example of use of the authentication device 11 as a fingerprint authentication system.

The fingerprint authentication system illustrated in Fig. 12 includes the authentication device 11, a personal computer 61, and a display 62. For example, an image of a fingerprint acquired by the authentication device 11 is subjected to authentication through image processing by the personal computer 61, and the authentication result is displayed on the display 62.

Fig. 13 illustrates an example of use of the authentication device 11 as a face authentication and iris authentication system.

The face authentication and iris authentication system illustrated in Fig. 13 includes the authentication device 11, a personal computer 61, and a display 62. For example, images of a face and an iris acquired by the authentication device 11 are subjected to authentication through image processing by the personal computer 61, and the authentication result is displayed on the display 62.

<Configuration example of light shielding portion>

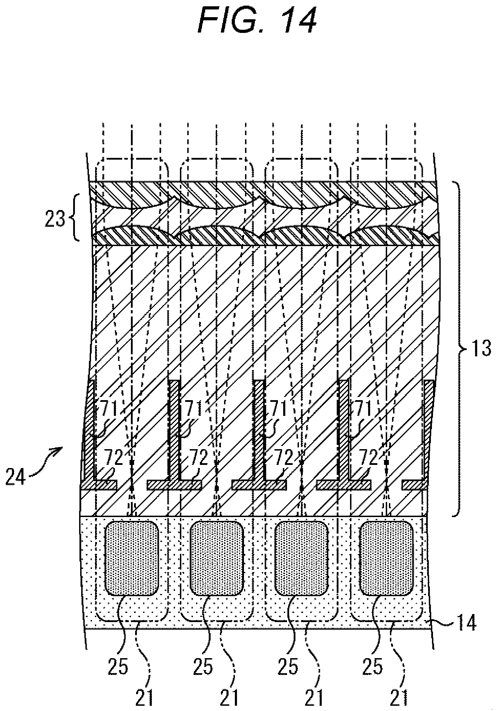

With reference to Figs. 14 to 18, a description will be given of a configuration example of the light shielding portion 24.

Fig. 14 illustrates a first configuration example of the light shielding portion 24.

As illustrated in Fig. 14, the light shielding portion 24 includes a light shielding wall 71 that serves as a partition between the adjacent pixels 21 to shield light, and a light shielding plane 72 where a pinhole is formed for each pixel 21. In addition, the light shielding portion 24 has such a form that the light shielding wall 71 extends from the light shielding plane 72 toward the object side. For example, the light shielding portion 24 can be formed from a metal with light shielding property, such as tungsten, and can avoid mixing of light entering another pixel 21.

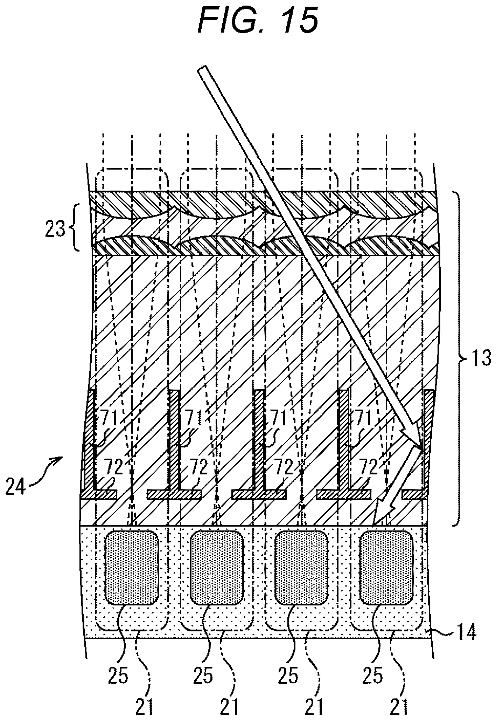

Meanwhile, it is considered that, in the light shielding portion 24 thus configured, as illustrated in Fig. 15, image quality may be degraded due to stray light resulting when oblique light is reflected at the light shielding wall 71.

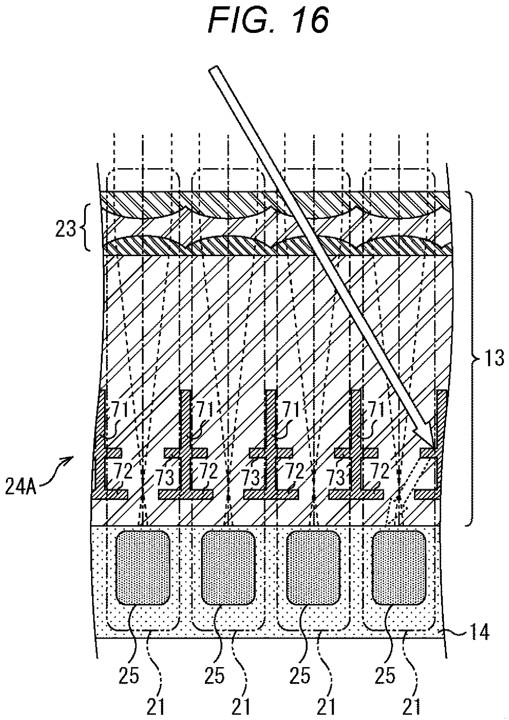

Fig. 16 illustrates a second configuration example of the light shielding portion 24.

As illustrated in Fig. 16, in the light shielding portion 24A, a second light shielding plane 73 having an opening corresponding to the pinhole formed in the light shielding plane 72 is arranged on the light shielding wall 71 and is located closer to the microlens group 23 than the light shielding wall 71 is. For example, the second light shielding plane 73 is provided such that light entering for each pixel 21 along the optical axis passes through the opening while light entering obliquely and reflected at the light shielding wall 71 is shielded. It is thus possible to avoid degradation in image quality due to the stray light illustrated in Fig. 15.

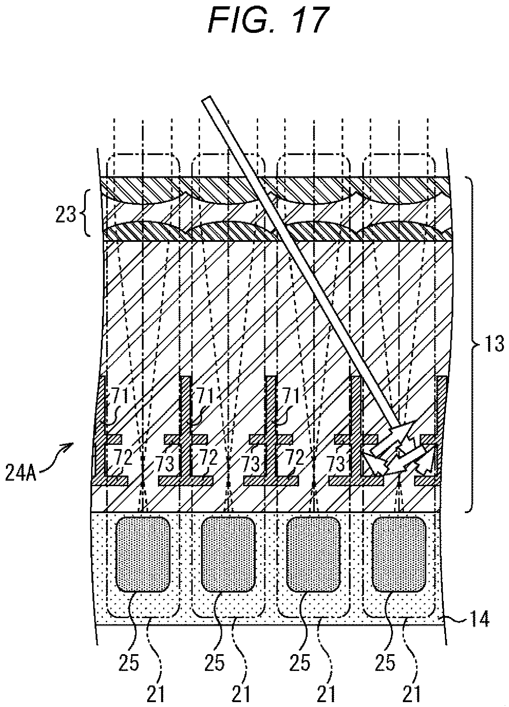

Meanwhile, it is considered that, in the light shielding portion 24A thus configured, as illustrated in Fig. 17, in a case where light entering obliquely passes through the opening in the second light shielding plane 73 and is reflected at the light shielding plane 72, stray light may result from multiple reflection.

Hence, the light shielding portion 24A (or the light shielding portion 24) may have a fine structure for reducing the reflectance of its surface.

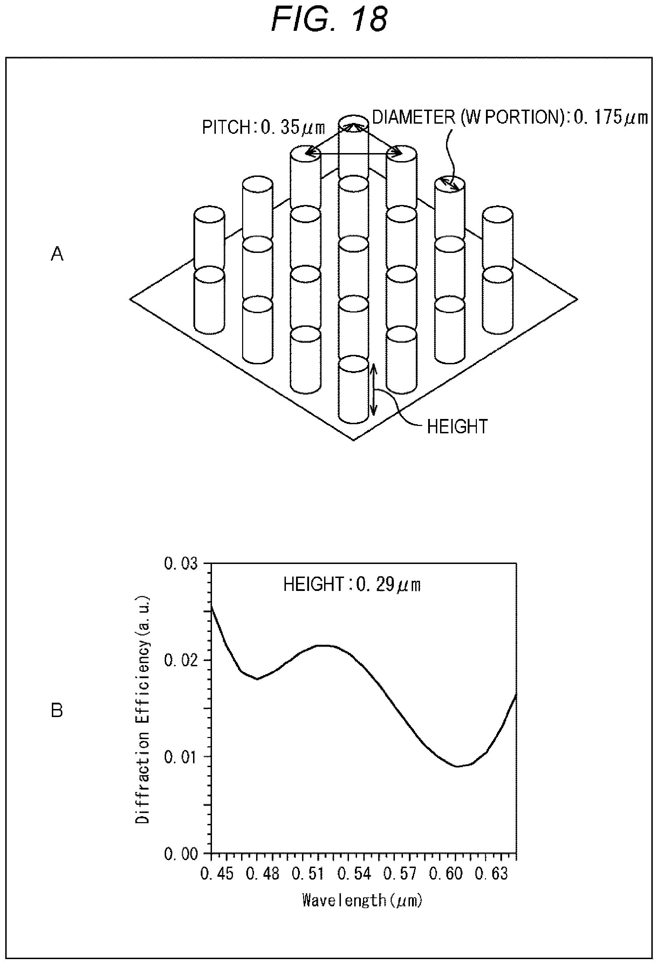

Preferably, for example, as illustrated in Fig. 18, a columnar fine structure having a height of 0.29 um and a diameter of 0.175 um is arranged periodically at a pitch of 0.35 um on the surfaces of the light shielding wall 71, light shielding plane 72, and second light shielding plane 73 that constitute the light shielding portion 24A. Such a fine structure can be prepared by, for example, subjecting a tungsten surface to etching. It is thus possible to reduce normally about 50% of reflectance to about 2% in the tungsten surface.

By providing such a fine structure, it is possible to suppress stray light that may result from the multiple reflection illustrated in Fig. 17.

<Configuration example of fingerprint sensor>

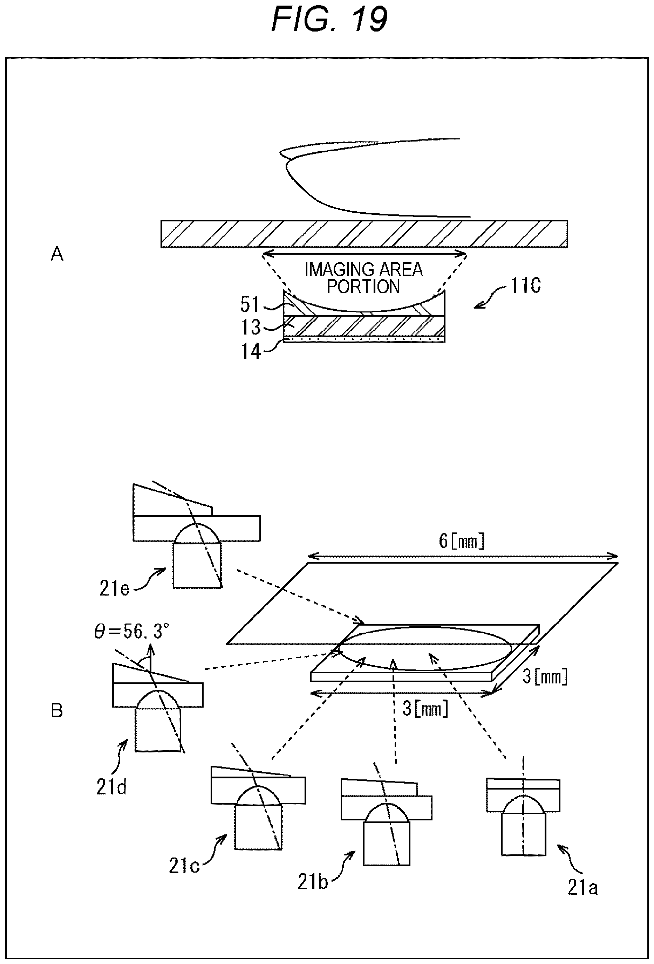

With reference to Fig. 19, a description will be given of a configuration example of the foregoing authentication device 11C of Fig. 9 applied to a fingerprint sensor.

As illustrated in A of Fig. 19, the authentication device 11C is capable of capturing an image of a fingertip placed through the cover glass, at an imaging area portion as illustrated.

As illustrated in B of Fig. 19, the authentication device 11C has a configuration in which light enters the microlens group 23 of each pixel 21, at specific oblique incidence in accordance with the pixel position. The authentication device 11C is thus capable of refracting the light even when the power of the concave lens 51 is weak. The authentication device 11C is thus capable of achieving a wider angle and enlarging the imaging area portion.

For example, the microlens group 23 and the axis of the pinhole in the light shielding portion 24 are displaced for each pixel 21 in accordance of the pixel position. It is thus possible to achieve a configuration in which light enters at the specific oblique incidence. For example, the pixel position of the pixel 21a is at a center of the authentication device 11C. The pixel 21b, the pixel 21c, and the pixel 21d are arranged from the center toward the outer periphery. The pixel position of the pixel 21e is near the outermost periphery of the authentication device 11C.

It should be noted that, in this fingerprint sensor, the configuration that uses the foregoing Fresnel lens 52 illustrated in A of Fig. 10 may be employed instead of the concave lens 51.

By employing the foregoing authentication device 11, it is possible to provide an image recognition system having a total length of 1 mm or less, not including an imaging lens, and improving utilization efficiency of light and the photodetector 25. For example, the authentication device 11 is capable of achieving a focal depth (e.g., 0.01 mm to $\infty$) that is considerably longer than a conventional focal depth, and is capable of close-up and proximity imaging that have not been achieved by the conventional technique.

In addition, it is considered that a focal point normally changes due to vibrations in a region where autofocusing is required. On the other hand, the authentication device 11 does not cause a change in focal point due to vibrations. In addition, the authentication device 11 does not cause variations due to temperature characteristics.

The authentication device 11 can be manufactured only by a semiconductor process. Therefore, it is possible to reduce a manufacturing cost for the image recognition system.

The image recognition system that employs the authentication device 11 is capable of obtaining an image of an object mounted on the cover glass 12 and is also capable of recognizing an object in a space away from the cover glass 12. Therefore, for example, fingerprint authentication, iris authentication, vein authentication, and face authentication can be provided using a single image recognition system.

The authentication device 11 is capable of providing an imaging system that does not cause chromatic abbreviation, and is capable of avoiding occurrence of a difference in focus between visible light and IR light even when, for example, a system that detects visible light and IR light concurrently is configured. The authentication device 11 is capable of constituting, at a lower cost, an IR light detection system that cannot use a lens to be used in a normal imaging lens. The authentication device 11 is usable widely as a lensless microscope and is applicable for, for example, cell screening, virus determination, and the like.

<Method for manufacturing authentication device>

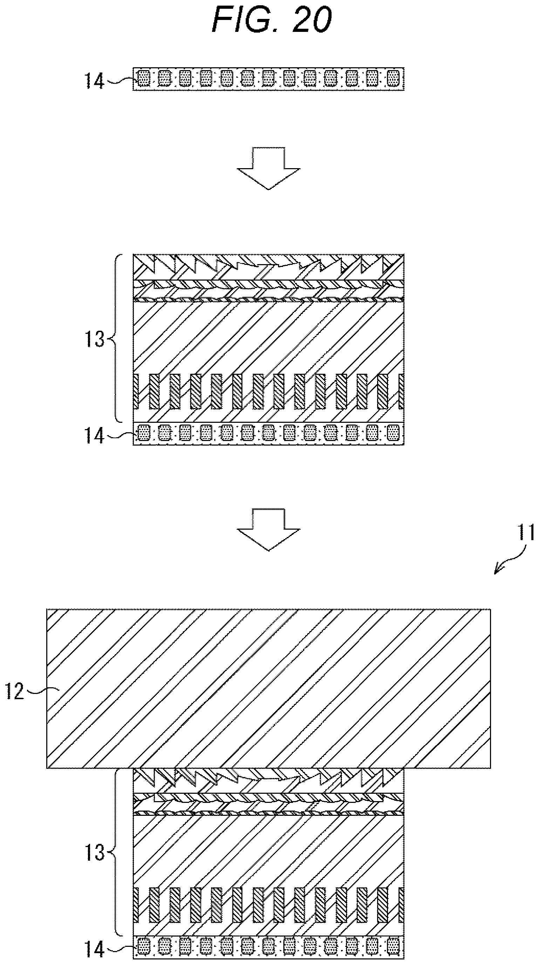

With reference to Fig. 20, a description will be given of a method for manufacturing the authentication device 11.

In a first step, the photodetector 25 is formed on the semiconductor substrate 14 for each pixel 21.

In a second step, the optical member 13 prepared by, for example, plastic molding, glass molding, or the like is bonded to the sensor light receiving plane of the semiconductor substrate 14.

In a third step, the cover glass 12 is bonded to the surface of the optical member 13.

As described above, the authentication device 11 can be manufactured in such a manner that the semiconductor substrate 14, the optical member 13, and the cover glass 12 are prepared individually and bonded together.

It should be noted that the optical member 13 can be prepared in such a manner that the foregoing transparent body 31, transparent body 32, lens body 33, transparent body 34, lens body 35, and transparent body 36 illustrated in Fig. 2 are formed individually and bonded together. Alternatively, the optical member 13 may be prepared in such a manner that resist formation and etching are performed repeatedly such that these components are stacked.

<Method for manufacturing hologram element>

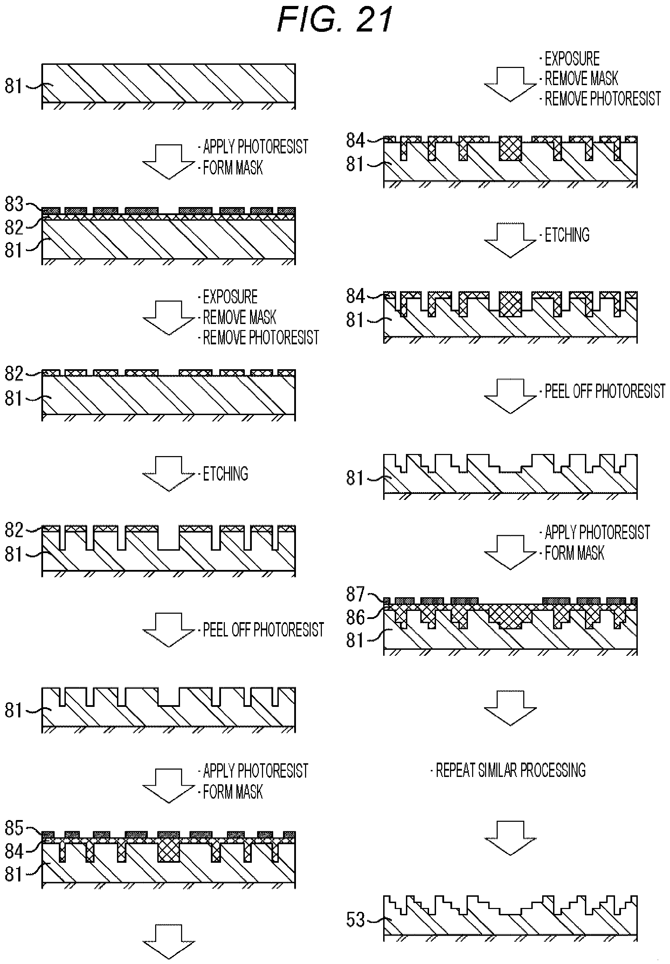

With reference to Fig. 21, a description will be given of a method for manufacturing the foregoing hologram element 53 illustrated in B of Fig. 10.

In a first step, for example, a 0.4-$\mu$m $SiO_2$ layer 81 serving as the hologram element 53 is formed on a surface of the optical member 13C including the transparent body 36, the lens body 33, and others.

In a second step, a photoresist 82 is applied onto the $SiO_2$ layer 81, so that a mask 83 is prepared. The mask 83 has holes corresponding a shape of a first stage of the hologram element 53.

In a third step, after exposure and development, the mask 83 is removed, and the photoresist 82 in each hole formed in the mask 83 is removed.

In a fourth step, the SiO2 layer 81 is etched, so that recesses serving as the first stage of the hologram element 53 are formed.

In a fifth step, the photoresist 82 is peeled off the $SiO_2$ layer 81, and the $SiO_2$ layer 81 is subjected to cleaning.

In a sixth step, a photoresist 84 is applied such that each recess formed in the fourth step is filled with the photoresist 84, so that a mask 85 is prepared. The mask 85 has holes corresponding a shape of a second stage of the hologram element 53.

In a seventh step, after exposure and development, the mask 85 is removed, and the photoresist 84 in each hole formed in the mask 85 is removed.

In an eighth step, the SiO2 layer 81 is etched, so that recesses serving as the second stage of the hologram element 53 are formed.

In a ninth step, the photoresist 84 is peeled off the $SiO_2$ layer 81, and the $SiO_2$ layer 81 is subjected to cleaning.

In a tenth step, a photoresist 86 is applied such that each recess formed in the fourth and eighth steps is filled with the photoresist 86, so that a mask 87 is prepared. The mask 87 has holes corresponding a shape of a third stage of the hologram element 53.

Similar processing is repeatedly performed in accordance with the number of stages of the hologram element 53 in a manner similar to that described above.

The hologram element 53 having a desired number of stages (four stages in the example illustrated in Fig. 21) is thus manufactured.

<Configuration example of electronic appliance>

The foregoing authentication device 11 is applicable to, for example, various electronic appliances such as imaging systems such as digital still cameras and digital video cameras, mobile telephones having an imaging function, or other appliances having an imaging function.

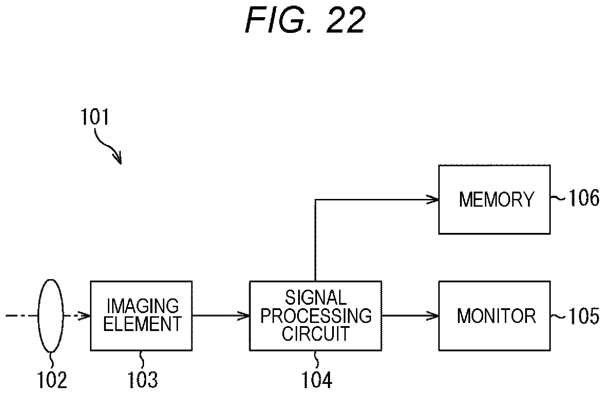

Fig. 22 is a block diagram illustrating a configuration example of an imaging apparatus to be mounted on an electronic appliance.

As illustrated in Fig. 22, an imaging apparatus 101 includes an optical system 102, an imaging element 103, a signal processing circuit 104, a monitor 105, and a memory 106.

The optical system 102 includes one or more lenses, guides image light (incident light) from a subject to the imaging element 103, and forms an image at a light receiving plane (sensor portion) of the imaging element 103.

The foregoing authentication device 11 is applied as the imaging element 103. The imaging element 103 accumulates electrons for a certain period of time in accordance with an image formed at the light receiving plane through the optical system 102. Then, a signal according to the electrons accumulated in the imaging element 103 is supplied to the signal processing circuit 104.

The signal processing circuit 104 subjects a pixel signal output from the imaging element 103, to various kinds of signal processing. An image (image data) obtained from the signal processing by the signal processing circuit 104 is supplied to and displayed on the monitor 105 or is supplied to and stored (recorded) in the memory 106.

In the imaging apparatus 101 thus configured, the foregoing authentication device 11 is applied to enable, for example, achievement of more preferable image quality.

<Example of use of image sensor>

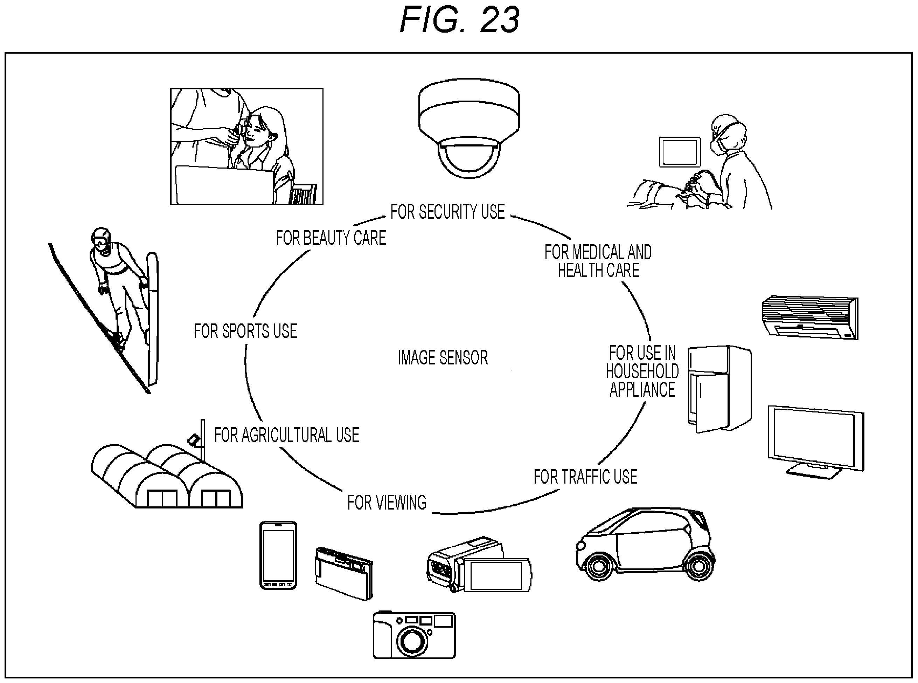

Fig. 23 is a diagram illustrating an example of use of the foregoing image sensor (authentication device 11).

The foregoing image sensor is usable in, for example, the following various cases that sense light such as visible light, infrared light, ultraviolet light, and X-rays.

· Apparatuses configured to capture images for appreciation use, such as digital cameras and camera function-equipped mobile appliances.

· Apparatuses for traffic use, such as in-vehicle sensors for capturing images forward of an automobile, images behind the automobile, images around the automobile, images of the interior of the automobile, and other images for the purpose of, for example, safety driving such as an automatic stop and recognition of a driver's state, monitoring cameras for monitoring traveling vehicles and roads, and distance sensors for measuring a distance between vehicles and the like.

· Apparatuses for use in home electronics such as television sets, refrigerators, and air conditioners, in order to capture an image of a user's gesture and operate an appliance in accordance with the gesture.

· Apparatuses for medical and healthcare use, such as endoscopes and apparatuses for capturing a blood vessel by receiving infrared light.

· Apparatuses for security use, such as monitoring cameras for crime prevention and cameras for personal identification applications.

· Apparatuses for beauty care use, such as skin measuring instruments for capturing an image of a skin, and microscopes for capturing an image of a scalp.

· Apparatuses for sports use, such as action cameras and wearable cameras for sports applications and other applications.

· Apparatuses for agricultural use, such as cameras for monitoring fields and crops conditions.

<Combination examples of configurations>

It should be noted that the present technology can take the following configurations.

(1) A light receiving apparatus including:

a semiconductor substrate including a first photodetector and a second photodetector arranged within at least substantially a same light receiving plane; and
an optical member including at least a first optical system that allows light to enter the first photodetector and a second optical system that allows light to enter the second photodetector,
in which
a first pixel of an image formed at the first photodetector with the light entering the first photodetector through the first optical system is different in orientation of a principal ray on an object side from a second pixel of an image formed at the second photodetector with the light entering the second photodetector through the second optical system.

(2) The light receiving apparatus as recited in (1), in which

the optical member includes, in sequence from the object side,
a refraction plane including an inclined surface inclined at a predetermined inclination angle and provided for each pixel,
a microlens group configured to form an image with the light for each photodetector, and
a light shielding portion disposed near a focal position of the microlens group and configured to allow transmission of only the collected light, for each pixel.

(3) The light receiving apparatus as recited in (2), in which

the refraction plane includes an interface between transparent bodies each having a predetermined refractive index, and
the inclination angle of the inclined surface is set for each pixel, so that the light entering the optical member is refracted in accordance with a difference in refractive index between the transparent bodies.

(4) The light receiving apparatus as recited in (2) or (3), in which

the microlens group includes a lens portion provided for each pixel,
each pixel has an optical axis extending from the corresponding photodetector to the microlens group in a direction perpendicular to the light receiving plane, and
the lens portion for a predetermined one of the pixels has a central axis that is located eccentrically with respect to an optical axis of the pixel so that an angle of a principal ray of the light entering the optical member is changed.

(5) The light receiving apparatus as recited in any of (2) to (4), in which
the refraction plane includes a concave lens, a Fresnel lens, or a hologram element.
(6) The light receiving apparatus as recited in any of (1) to (5), further including
a cover glass disposed closer to the object side than the optical member is.
(7) The light receiving apparatus as recited in (6), in which
a transparent body including a medium other than air is interposed between the cover glass and the semiconductor substrate.
(8) The light receiving apparatus as recited in (2), in which
an angle $\theta$ formed by an upper ray and a lower ray in the pixel located at a center of the light receiving plane satisfies a condition represented by the following formula (1) :
[Mathematical Formula 1]

$$-10° \leqq \theta \leqq 10° \qquad \cdots (1)$$

(9) The light receiving apparatus as recited in (2), in which
a focal length fg of the microlens group satisfies a condition represented by the following formula (2): [Mathematical Formula 2]

$$0.0003mm \leqq fg \leqq 3mm \qquad \cdots (2)$$

(10) The light receiving apparatus as recited in (2), in which
a diameter of a pinhole provided in the light shielding portion satisfies a condition represented by the following formula (3):
[Mathematical Formula 3]

$$0.1\mu m \leqq dm \leqq 2\mu m \qquad \cdots (3)$$

(11) The light receiving apparatus as recited in (10), in which
the light shielding portion includes a light shielding plane where the pinhole is formed and a light shielding wall serving as a partition between the adjacent pixels.
(12) The light receiving apparatus as recited in (11), in which

13

the light shielding portion includes a second light shielding plane having an opening corresponding to the pinhole, the second light shielding plane disposed closer to the microlens group than the light shielding plane is.

(13) The light receiving apparatus as recited in any of (2) to (12), in which a fine structure for reflection prevention is provided on a surface of the light shielding portion.

(14) An electronic appliance including

a light receiving apparatus,
in which
the light receiving apparatus includes:

a semiconductor substrate including a first photodetector and a second photodetector arranged within at least substantially a same light receiving plane; and
an optical member including at least a first optical system that allows light to enter the first photodetector and a second optical system that allows light to enter the second photodetector, and
a first pixel of an image formed at the first photodetector with the light entering the first photodetector through the first optical system is different in orientation of a principal ray on an object side from a second pixel of an image formed at the second photodetector with the light entering the second photodetector through the second optical system.

It should be noted that an embodiment of the present disclosure is not limited to the foregoing embodiments and various modifications may be made without departing from the scope of the present disclosure. Further, the advantageous effects recited in the present specification are merely illustrative and not restrictive. The present technology may produce other advantageous effects.

REFERENCE SIGNS LIST

11   Authentication device
12   Cover glass
13   Optical member
14   Semiconductor substrate
21   Pixel
22   Refraction plane
23   Microlens group
24   Light shielding portion
25   Photodetector
31   Transparent body
32   Transparent body
33   Lens body
34   Transparent body
35   Lens body
36   Transparent body
41   Inclined surface
42   Lens portion
51   Concave lens
52   Fresnel lens
53   Hologram element
54   Double-sided concave lens
61   Personal computer
62   Display
71   Light shielding wall
72   Light shielding plane
73   Second light shielding plane

**Claims**

1. A light receiving apparatus comprising:

   a semiconductor substrate including a first photodetector and a second photodetector arranged within at least substantially a same light receiving plane; and
   an optical member including at least a first optical system that allows light to enter the first photodetector and a second optical system that allows light to enter the second photodetector,
   wherein
   a first pixel of an image formed at the first photodetector with the light entering the first photodetector through the first optical system is different in orientation of a principal ray on an object side from a second pixel of an image formed at the second photodetector with the light entering the second photodetector through the second optical system.

2. The light receiving apparatus according to claim 1, wherein

   the optical member includes, in sequence from the object side,
   a refraction plane including an inclined surface inclined at a predetermined inclination angle and provided for each pixel,
   a microlens group configured to form an image with the light for each photodetector, and
   a light shielding portion disposed near a focal position of the microlens group and configured to allow transmission of only the collected light, for each pixel.

3. The light receiving apparatus according to claim 2, wherein

   the refraction plane includes an interface between transparent bodies each having a predetermined refractive index, and
   the inclination angle of the inclined surface is set for each pixel, so that the light entering the optical member is refracted in accordance with a difference in refractive index between the transparent bodies.

4. The light receiving apparatus according to claim 2, wherein

   the microlens group includes a lens portion provided for each pixel,
   each pixel has an optical axis extending from the corresponding photodetector to the microlens group in a direction perpendicular to the light receiving plane, and
   the lens portion for a predetermined one of the pixels has a central axis that is located eccentrically with respect to an optical axis of the pixel so that an angle of a principal ray of the light entering the optical member is changed.

5. The light receiving apparatus according to claim 2, wherein
   the refraction plane comprises a concave lens, a Fresnel lens, or a hologram element.

6. The light receiving apparatus according to claim 1, further comprising
   a cover glass disposed closer to the object side than the optical member is.

7. The light receiving apparatus according to claim 6, wherein
   a transparent body comprising a medium other than air is interposed between the cover glass and the semiconductor substrate.

8. The light receiving apparatus according to claim 2, wherein
   an angle $\theta$ formed by an upper ray and a lower ray in the pixel located at a center of the light receiving plane satisfies a condition represented by the following formula (1) :
   [Mathematical Formula 1]

$$-10° \leqq \theta \leqq 10° \qquad \cdots (1)_.$$

9. The light receiving apparatus according to claim 2, wherein
   a focal length fg of the microlens group satisfies a condition represented by the following formula (2): [Mathematical

Formula 2]

$$0.0003mm \leqq fg \leqq 3mm \qquad \cdots (2).$$

10. The light receiving apparatus according to claim 2, wherein
a diameter of a pinhole provided in the light shielding portion satisfies a condition represented by the following formula (3):
[Mathematical Formula 3]

$$0.1\mu m \leqq dm \leqq 2\mu m \qquad \cdots (3).$$

11. The light receiving apparatus according to claim 10, wherein
the light shielding portion includes a light shielding plane where the pinhole is formed and a light shielding wall serving as a partition between the adjacent pixels.

12. The light receiving apparatus according to claim 11, wherein
the light shielding portion includes a second light shielding plane having an opening corresponding to the pinhole, the second light shielding plane disposed closer to the microlens group than the light shielding plane is.

13. The light receiving apparatus according to claim 2, wherein
a fine structure for reflection prevention is provided on a surface of the light shielding portion.

14. An electronic appliance comprising

a light receiving apparatus,
wherein
the light receiving apparatus includes:

a semiconductor substrate including a first photodetector and a second photodetector arranged within at least substantially a same light receiving plane; and
an optical member including at least a first optical system that allows light to enter the first photodetector and a second optical system that allows light to enter the second photodetector, and

a first pixel of an image formed at the first photodetector with the light entering the first photodetector through the first optical system is different in orientation of a principal ray on an object side from a second pixel of an image formed at the second photodetector with the light entering the second photodetector through the second optical system.

# FIG. 1

11

12

13    14

21-1
25-1
21-2
25-2
21-3
25-3
21-4
25-4
21-5
25-5
21-6
25-6
21-7
25-7
21-8
25-8
21-9
25-9
21-10
25-10
21-11
25-11
21-12
25-12
21-13
25-13

22    23    24

45μm

FIG. 2

61.2μm

70μm

EP 4 231 062 A1

# FIG. 3

# FIG. 4

## FIG. 5

MAIN LIGHT BEAM 4.7° (OFF-AXIS LIGHT BEAM)

MAIN LIGHT BEAM 0°
(ON-AXIS LIGHT BEAM)

OBJECT SIDE

2.31 μm

IMAGE SIDE

0.61 μm

## FIG. 6

EP 4 231 062 A1

## FIG. 7

11A

12

13A

14

21-1
25-1
21-2
25-2
21-3
25-3
21-4
25-4
21-5
25-5
21-6
25-6
21-7
25-7
21-8
25-8
21-9
25-9
21-10
25-10
21-11
25-11
21-12
25-12
21-13
25-13

22  23A  24

## FIG. 8

# FIG. 9

# FIG. 10

A

52

52

B

53

53

# FIG. 11

A

B

FIG. 12

# FIG. 13

FACE AUTHENTICATION AND IRIS AUTHENTICATION WILL BE PERFORMED.

# FIG. 14

# FIG. 15

# FIG. 16

# FIG. 17

# FIG. 18

# FIG. 19

A

IMAGING AREA
PORTION

11C

51
13
14

B

21e

θ=56.3°

6 [mm]

21d

3 [mm]

3 [mm]

21c

21b

21a

# FIG. 20

# FIG. 21

81 —

- APPLY PHOTORESIST
- FORM MASK

83 —
82 —
81 —

- EXPOSURE
- REMOVE MASK
- REMOVE PHOTORESIST

82 —
81 —

- ETCHING

82 —
81 —

- PEEL OFF PHOTORESIST

81 —

- APPLY PHOTORESIST
- FORM MASK

85 —
84 —
81 —

- EXPOSURE
- REMOVE MASK
- REMOVE PHOTORESIST

84 —
81 —

- ETCHING

84 —
81 —

- PEEL OFF PHOTORESIST

81 —

- APPLY PHOTORESIST
- FORM MASK

87 —
86 —
81 —

- REPEAT SIMILAR PROCESSING

53 —

# FIG. 22

101

MEMORY ~106

IMAGING ELEMENT → SIGNAL PROCESSING CIRCUIT → MONITOR ~105

102    103    104

FIG. 23

## INTERNATIONAL SEARCH REPORT

| International application No. |
| --- |
| **PCT/JP2021/036639** |

**A.     CLASSIFICATION OF SUBJECT MATTER**

*G02B 3/00*(2006.01)i; *G02B 3/08*(2006.01)i; *G02B 1/118*(2015.01)i; *G02B 5/32*(2006.01)i; *H01L 27/146*(2006.01)i; *H04N 5/225*(2006.01)i; *H04N 5/335*(2011.01)i; *G06F 3/041*(2006.01)i; *G06F 3/042*(2006.01)i

FI:    H01L27/146 D; G02B3/00; G02B3/00 A; G02B3/08; G02B5/32; G02B1/118; H04N5/225 400; H04N5/225 300; G06F3/042 471; G06F3/041 520; H04N5/335

According to International Patent Classification (IPC) or to both national classification and IPC

**B.     FIELDS SEARCHED**

Minimum documentation searched (classification system followed by classification symbols)

G02B3/00; G02B3/08; G02B1/118; G02B5/32; H01L27/146; H04N5/225; H04N5/335; G06F3/041; G06F3/042

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.     DOCUMENTS CONSIDERED TO BE RELEVANT**

| Category* | Citation of document, with indication, where appropriate, of the relevant passages | Relevant to claim No. |
| --- | --- | --- |
| X | JP 2007-173746 A (MATSUSHITA ELECTRIC IND CO LTD) 05 July 2007 (2007-07-05) paragraphs [0020]-[0042], [0059]-[0070], fig. 1-3, 9, 10 | 1, 14 |
| Y | | 6, 7 |
| A | | 2-5, 8-13 |
| X | JP 2014-165270 A (SONY CORP) 08 September 2014 (2014-09-08) paragraphs [0101]-[0116], fig. 11 | 1, 14 |
| Y | | 6, 7 |
| A | | 2-5, 8-13 |
| Y | JP 2017-103478 A (OLYMPUS CORP) 08 June 2017 (2017-06-08) fig. 1 | 6, 7 |
| Y | JP 2019-87996 A (PANASONIC INTELLECTUAL PROPERTY MANAGEMENT CO., LTD.) 06 June 2019 (2019-06-06) fig. 1 | 6, 7 |

✓ Further documents are listed in the continuation of Box C.     ✓ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 October 2021** | **09 November 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

International application No.

**PCT/JP2021/036639**

### C.    DOCUMENTS CONSIDERED TO BE RELEVANT

| Category* | Citation of document, with indication, where appropriate, of the relevant passages | Relevant to claim No. |
|---|---|---|
| A | JP 2006-134911 A (SONY CORP) 25 May 2006 (2006-05-25)<br>entire text, all drawings | 1-14 |
| A | JP 2011-176715 A (NIKON CORP) 08 September 2011 (2011-09-08)<br>entire text, all drawings | 1-14 |

Form PCT/ISA/210 (second sheet) (January 2015)

INTERNATIONAL SEARCH REPORT
Information on patent family members

International application No.

**PCT/JP2021/036639**

| Patent document cited in search report | | | Publication date (day/month/year) | Patent family member(s) | | | Publication date (day/month/year) |
|---|---|---|---|---|---|---|---|
| JP | 2007-173746 | A | 05 July 2007 | (Family: none) | | | |
| JP | 2014-165270 | A | 08 September 2014 | US<br>paragraphs [0112]-[0127], fig.<br>11<br>CN | 2014/0239155<br><br><br>104009051 | A1<br><br><br>A | |
| JP | 2017-103478 | A | 08 June 2017 | US<br>fig. 1<br>WO<br>EP<br>CN | 2015/0085094<br><br>2013/179766<br>2858105<br>104364894 | A1<br><br>A1<br>A1<br>A | |
| JP | 2019-87996 | A | 06 June 2019 | US<br>fig. 1<br>CN | 2019/0140014<br><br>109768060 | A1<br><br>A | |
| JP | 2006-134911 | A | 25 May 2006 | (Family: none) | | | |
| JP | 2011-176715 | A | 08 September 2011 | US<br>entire text, all drawings | 2011/0279727 | A1 | |

Form PCT/ISA/210 (patent family annex) (January 2015)

**REFERENCES CITED IN THE DESCRIPTION**

**Patent documents cited in the description**

- JP 5488928 B

- JP 2007520743 W